(19) Europäisches Patentamt
European Patent Office
Office européen des brevets

(11) **EP 4 495 186 A1**

(12) **EUROPEAN PATENT APPLICATION**
published in accordance with Art. 153(4) EPC

(43) Date of publication:
**22.01.2025 Bulletin 2025/04**

(21) Application number: **23770355.8**

(22) Date of filing: **27.02.2023**

(51) International Patent Classification (IPC):
***C08L 69/00*** *(2006.01)* ***C08K 5/103*** *(2006.01)*
***C08K 5/524*** *(2006.01)* ***C08L 25/14*** *(2006.01)*
***C08L 63/00*** *(2006.01)*

(52) Cooperative Patent Classification (CPC):
**C08K 5/103; C08K 5/524; C08L 25/14; C08L 63/00; C08L 69/00**

(86) International application number:
**PCT/JP2023/007005**

(87) International publication number:
**WO 2023/176396 (21.09.2023 Gazette 2023/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.03.2022 JP 2022039986**

(71) Applicant: **Teijin Limited**
**Osaka 530-0005 (JP)**

(72) Inventor: **ISHITANI Yoshinobu**
**Osaka-shi Osaka 530-0005 (JP)**

(74) Representative: **Kraus & Lederer PartGmbB**
**Thomas-Wimmer-Ring 15**
**80539 München (DE)**

# (54) AROMATIC POLYCARBONATE RESIN COMPOSITION AND MOLDED ARTICLE THEREOF

(57) Provided is an aromatic polycarbonate resin composition, containing 0.02 to 0.04 parts by weight of (B) an epoxy group-containing compound (component B); and 0.06 to 0.15 parts by weight of (C) a glycerin monofatty acid ester (component C) relative to 100 parts by weight of (A) an aromatic polycarbonate resin (component A), and this resin composition is characterized by excellent moist heat resistance and molding heat resistance.



Processed by Luminess, 75001 PARIS (FR)

## Description

Technical Field

The present invention relates to an aromatic polycarbonate resin composition that is excellent in moist heat resistance and molding heat resistance and a molded article thereof.

Background Art

Among polymer materials, aromatic polycarbonate resins are materials that are relatively excellent in heat resistance. However, higher functionality and higher performance of materials are increasingly required, and further improvement of moist heat resistance and molding heat resistance is needed.

So far, as a technique in which a fatty acid ester and an epoxy compound are used in combination, PTL 1 is known. However, in the case of the ester of pentaerythritol and an aliphatic carboxylic acid shown in Examples, moist heat resistance is insufficient, and in the case of the addition amount of the glycerin monofatty acid ester shown in Comparative Examples, molding heat resistance is insufficient.

In PTL 2, the addition amount of the epoxy group-containing compound shown in Examples is 0.0075 parts by mass or less relative to 100 parts by weight of the polycarbonate resin, and the moist heat resistance is insufficient in this addition range.

In PTL 3 and PTL 4, the addition amounts of the glycerin monofatty acid ester are 0.05 parts by mass or less, release properties are insufficient, and there is a problem in molding properties.

Citation List

Patent Literatures

PTL 1: JP 5542810 B
PTL 2: JP 2020-132840 A
PTL 3: JP 2021-134286 A
PTL 4: JP 2021-120458 A

Summary of Invention

Technical Problem

An object of the invention is to provide an aromatic polycarbonate resin composition that is excellent in moist heat resistance and molding heat resistance and a molded article thereof.

Solution to Problem

The present inventors have conducted intensive studies to solve the problems and found that the object is achieved by an aromatic polycarbonate resin composition in which an epoxy group-containing compound and a glycerin monofatty acid ester are blended into an aromatic polycarbonate resin in a specific ratio and a molded article thereof, thereby completed the invention.

That is, according to the invention, the following (structure 1) to (structure 4) are provided.

(Structure 1)

A polycarbonate resin composition, containing: 0.02 to 0.04 parts by weight of (B) an epoxy group-containing compound (component B); and 0.06 to 0.15 parts by weight of (C) a glycerin monofatty acid ester (component C) relative to 100 parts by weight of (A) an aromatic polycarbonate resin (component A).

(Structure 2)

The resin composition according to structure 1, containing: 0.01 to 0.02 parts by weight of (D) an aromatic phosphite ester heat stabilizer (component D) relative to 100 parts by weight of the component A.

(Structure 3)

The resin composition according to structure 1 or 2, wherein the component B is a copolymer of styrene and glycidyl methacrylate.

(Structure 4)

A molded article, which is formed from the aromatic polycarbonate resin composition according to any one of structures 1 to 3.

Advantageous Effects of Invention

The aromatic polycarbonate resin composition of the invention is excellent in moist heat resistance and molding heat resistance. Thus, the aromatic polycarbonate resin composition can be applied to various uses in which aromatic polycarbonate resin compositions are used, and has a high industrial value.

Description of Embodiments

Hereinafter, the invention will be described in detail.

<Aromatic polycarbonate resin (component A)>

An example of the aromatic polycarbonate resin used as a component (A) in the invention is one obtained by reacting a dihydric phenol with a carbonate precursor by interfacial polymerization method (solution method) or melting method.

Typical examples of the dihydric phenol used herein include hydroquinone, resorcinol, 4,4'-dihydroxydiphenyl, 1,4-dihydroxynaphthalene, bis(4-hydroxyphenyl)methane, bis{(4-hydroxy-3,5-dimethyl)phenyl}methane, 1,1-bis(4-hydroxyphenyl)ethane, 1,1-bis(4-hydroxyphenyl)-1-phenylethane, 2,2-bis(4-hydroxyphenyl)propane (common name: bisphenol A), 2,2-bis{(4-hydroxy-3-methyl)phenyl}propane, 2,2-bis{(4-hydroxy-3,5-dimethyl)phenyl}propane, 2,2-bis{(3,5-dibromo-4-hydroxy)phenyl}propane, 2,2-bis{(3-isopropyl-4-hydroxy)phenyl}propane, 2,2-bis{(4-hydroxy-3-phenyl)phenyl}propane, 2,2-bis(4-hydroxyphenyl)butane, 2,2-bis(4-hydroxyphenyl)-3-methylbutane, 2,2-bis(4-hydroxyphenyl)-3,3-dimethylbutane, 2,4-bis(4-hydroxyphenyl)-2-methylbutane, 2,2-bis(4-hydroxyphenyl)pentane, 2,2-bis(4-hydroxyphenyl)-4-methylpentane, 1,1-bis(4-hydroxyphenyl)cyclohexane, 1,1-bis(4-hydroxyphenyl)-4-isopropylcyclohexane, 1,1-bis(4-hydroxyphenyl)-3,3,5-trimethylcyclohexane, 9,9-bis(4-hydroxyphenyl)fluorene, 9,9-bis{(4-hydroxy-3-methyl)phenyl}fluorene, $\alpha,\alpha'$-bis(4-hydroxyphenyl)-o-diisopropylbenzene, $\alpha,\alpha'$-bis(4-hydroxyphenyl)-m-diisopropylbenzene, $\alpha,\alpha'$-bis(4-hydroxyphenyl)-p-diisopropylbenzene, 1,3-bis(4-hydroxyphenyl)-5,7-dimethyladamantane, 4,4'-dihydroxydiphenyl sulfone, 4,4'-dihydroxydiphenyl sulfoxide, 4,4'-dihydroxydiphenyl sulfide, 4,4'-dihydroxydiphenyl ketone, 4,4'-dihydroxydiphenyl ether, and 4,4'-dihydroxydiphenyl ester. Preferred dihydric phenols are bis(4-hydroxyphenyl)alkanes, and among them, bisphenol A is particularly preferable.

As the carbonate precursor, a carbonyl halide, a carbonate ester, a haloformate or the like is used, and specific examples thereof include phosgene, diphenylcarbonate, and dihaloformate of a dihydric phenol.

In the production of an aromatic polycarbonate resin by reacting the dihydric phenol and a carbonate precursor by interfacial polymerization method or melting method, the dihydric phenol can be used alone or in combination of two or more types thereof, and a catalyst, a terminal stopper, an antioxidant of the dihydric phenol or the like can be used as needed. The aromatic polycarbonate resin can be a branched polycarbonate resin obtained by copolymerization of a polyfunctional aromatic compound that is tri- or higher functional. The aromatic polycarbonate resin can be also a mixture of two or more aromatic polycarbonate resins.

The reaction by interfacial polymerization method is usually a reaction between a dihydric phenol and phosgene, and the reaction is performed in the presence of an acid-binding agent and an organic solvent. As the acid-binding agent, for example, alkali metal hydroxides such as sodium hydroxide and potassium hydroxide, or amine compounds such as pyridine are used. As the organic solvent, for example, halogenated hydrocarbons such as methylene chloride and chlorobenzene are used. Catalysts such as, for example, a tertiary amine and a quaternary ammonium salt can be used for reaction promotion. At that time, the reaction temperature is usually 0 to 40°C, and the reaction time is about a few minutes to 5 hours.

The reaction by melting method is usually an ester exchange reaction between a dihydric phenol and a diphenylcarbonate, in which a dihydric phenol and diphenylcarbonate are mixed in the presence of an inert gas, and usually reacted at 120 to 350°C under reduced pressure. The pressure-reducing degree is gradually changed to the final pressure of $1.3 \times 10^2$ Pa or less, and the produced phenols are removed outside the system. The reaction time is usually

about 1 to 4 hours.

In the polymerization reaction, monofunctional phenols can be used as a terminal stopper. In particular, in the case of a reaction where phosgene is used as a carbonate precursor, monofunctional phenols are generally used as a terminal stopper for molecular weight regulation, the terminal of the obtained aromatic polycarbonate resin is blocked by a group based on monofunctional phenols, and thus the aromatic polycarbonate resin is excellent in heat stability compared to those whose terminals are not blocked. Such monofunctional phenols can be those that are used as a terminal stopper of a polycarbonate, are generally phenol or a lower alkyl-substituted phenol, and examples thereof include a monofunctional phenol represented by the following formula (1):

[Chem 1]

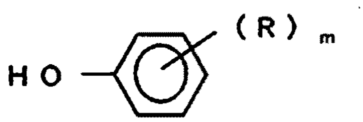

(1)

[In the formula, R is a hydrogen atom, or an alkyl group or a phenylalkyl group having 1 to 9 carbon atoms, and m represents an integer of 1 to 5, preferably 1 to 3.] Specific examples of the monofunctional phenol include phenol, p-tert-butylphenol, p-cumylphenol, and isooctylphenol.

For the molecular weight of the aromatic polycarbonate resin in the invention, the viscosity average molecular weight (M) is preferably 10,000 to 50,000, and more preferably 14,000 to 35,000. An aromatic polycarbonate resin having such a viscosity average molecular weight is preferable because the aromatic polycarbonate resin keeps relatively good fluidity during extrusion molding process, and the obtained molded article has a specific mechanical strength.

The viscosity average molecular weight of the aromatic polycarbonate resin in the invention is one obtained by first determining the specific viscosity ($\eta_{SP}$) calculated by the following formula from the solution in which 0.7 g of a polycarbonate resin material is dissolved in 100 ml of methylene chloride at 20°C using an Ostwald viscometer:

$$\text{Specific viscosity } (\eta_{SP}) = (t - t_0)/t_0$$

[$t_0$ is the number of seconds during which methylene chloride drops, and t is the number of seconds during which the sample solution drops],
and calculating the viscosity average molecular weight Mv from the determined specific viscosity ($\eta_{SP}$) by the following formula:

$\eta_{SP}/c = [\eta] + 0.45 \times [\eta]^2 c$ (where $[\eta]$ is the limiting viscosity)

$$[\eta] = 1.23 \times 10^{-4} Mv^{0.83}$$

$$c = 0.7$$

<Epoxy group-containing compound (component B)>

The epoxy group-containing compound used in the invention is mainly blended for the purpose of improving the moist heat resistance, and basically any one having an epoxy functional group can be applied.

Specific examples of the preferable epoxy group-containing compound include 3,4-epoxycyclohexylmethyl-3',4'-epoxycyclohexylcarboxylate, 1,2-epoxy-4-(2-oxiranyl)cyclosexane adduct of 2,2-bis(hydroxymethyl)-1-butanol, a copolymer of methyl methacrylate and glycidyl methacrylate, and a copolymer of styrene and glycidyl methacrylate. The epoxy group-containing compound is preferably a copolymer containing a glycidyl group, and more preferably a copolymer of styrene and glycidyl methacrylate. Examples of the commercially available product of a copolymer of styrene and glycidyl methacrylate include MARPROOF G-0250SP manufactured by NOF CORPORATION.

The blending amount of the epoxy group-containing compound used in the invention is 0.02 to 0.04 parts by weight, and is preferably 0.02 to 0.03 parts by weight relative to 100 parts by weight of the aromatic polycarbonate resin. When the blending amount is within the range, the moist heat resistance and molding heat resistance are good.

<Glycerin monofatty acid ester (component C)>

The glycerin monofatty acid ester used in the invention is a condensate of an aliphatic monocarboxylic acid and glycerin. Examples of the aliphatic monocarboxylic acid include a saturated or unsaturated aliphatic monocarboxylic acid, the aliphatic monocarboxylic acid can be a chain aliphatic monocarboxylic acid or a cyclic aliphatic monocarboxylic acid, and a chain aliphatic monocarboxylic acid is preferable. The carbon number of the aliphatic monocarboxylic acid is preferably 6 or more and 40 or less, more preferably 8 or more and 32 or less, and further preferably 12 or more and 24 or less.

Examples of the saturated aliphatic monocarboxylic acid include capric acid, neodecanoic acid, lauric acid, myristic acid, palmitic acid, stearic acid, arachidic acid, behenic acid, and lignoceric acid. Examples of the unsaturated aliphatic carboxylic acid include undecylenic acid, oleic acid, elaidic acid, erucic acid, nervonic acid, linoleic acid, γ-linolenic acid, arachidonic acid, α-linolenic acid, stearidonic acid, eicosapentaenoic acid, and docosahexaenoic acid.

Among the above, as the aliphatic monocarboxylic acid, lauric acid, myristic acid, palmitic acid, stearic acid, and behenic acid are preferable, palmitic acid, stearic acid, and behenic acid are more preferable, and stearic acid is further preferable.

As the glycerin monofatty acid ester used in the invention, glycerin monostearate is preferable. Examples of the commercially available product of glycerin monostearate include RIKEMAL S-100A manufactured by RIKEN VITAMIN CO., LTD.

The blending amount of the glycerin monofatty acid ester used in the invention is 0.06 to 0.15 parts by weight, preferably 0.07 to 0.13 parts by weight, and further preferably 0.09 to 0.11 parts by weight relative to 100 parts by weight of the aromatic polycarbonate resin. When the blending amount is within the range, the release properties, the moist heat resistance, and the molding heat resistance are good.

<Aromatic phosphite ester heat stabilizer (component D)>

Examples of the aromatic phosphite ester heat stabilizer preferably used in the invention include triaryl phosphites such as triphenyl phosphite, tricresyl phosphite, tris(ethylphenyl)phosphite, tris(2,4-di-t-butylphenyl)phosphite, tris(nonylphenyl)phosphite, and tris(hydroxyphenyl)phosphite; and arylalkyl phosphites such as phenyldidecylphosphite, diphenyldecylphosphite, diphenylisooctyl phosphite, phenylisooctyl phosphite, and 2-ethylhexyldiphenylphosphite. Among aromatic phosphite ester heat stabilizers, tris(2,4-di-tert.-butylphenyl)phosphite is preferable. Examples of the commercially available product of tris(2,4-di-tert.-butylphenyl)phosphite include Irgafos 168 manufactured by BASF.

The blending amount of the aromatic phosphite ester heat stabilizer preferably used in the invention is preferably 0.01 to 0.02 parts by weight, more preferably 0.012 to 0.018 parts by weight, and further preferably 0.014 to 0.016 parts by weight relative to 100 parts by weight of the aromatic polycarbonate resin. When the blending amount is within the range, the moist heat resistance and the molding heat resistance are excellent.

(Other additives)

In order to improve the flame retardance, the antioxidation properties, the light stability (ultraviolet stability) of the resin composition of the invention, additives used for improvement of these are advantageously used. Hereinafter, these additives will be specifically described.

(I) Flame retardant

Various compounds known as a flame retardant of a polycarbonate resin can be blended in the resin composition of the invention. Blending of these compounds improves the flame retardance, and in addition to that, improves, for example, the antistatic properties, the fluidity, the rigidity, and the heat stability depending on the properties of each compound. Examples of such a flame retardant include (i) an organometallic salt flame retardant (for example, an organic sulfonic acid alkali (earth) metal salt, an organic boric acid metal salt flame retardant, and an organic stannate metal salt flame retardant), (ii) an organic phosphorus flame retardant (for example, a monophosphate compound containing an organic group, a phosphate oligomer compound, a phosphonate oligomer compound, a phosphonitrile oligomer compound, and a phosphonic acid amide compound), (iii) a silicone flame retardant including a silicone compound, and (iv) fibrillated PTFE, and among these, an organometallic salt flame retardant and an organic phosphorus flame retardant are preferable.

(i) Organometallic salt flame retardant

The organometallic salt compound is preferably an alkali (earth) metal salt of an organic acid having 1 to 50 carbon atoms, preferably 1 to 40 carbon atoms, and is preferably an organic sulfonic acid alkali (earth) metal salt. This organic sulfonic acid alkali (earth) metal salt includes a metal salt of a fluorine substituted alkyl sulfonic acid such as a metal salt of a perfluoroalkyl sulfonic acid having 1 to 10, preferably 2 to 8 carbon atoms and an alkali metal or an alkali earth metal, and a metal salt of an aromatic sulfonic acid having 7 to 50, preferably 7 to 40 carbon atoms and an alkali metal or an alkali earth metal. Examples of the alkali metal that constitutes the metal salt include lithium, sodium, potassium, rubidium, and cesium, and examples of the alkali earth metal include beryllium, magnesium, calcium, strontium, and barium. An alkali metal is more suitable. Among such alkali metals, when clarity is more highly required, rubidium and cesium, which have larger ionic radiuses, are suitable. However, these are not versatile and also difficult to be refined, and thus may be disadvantageous in terms of cost. On the other hand, metals having smaller ionic radiuses such as lithium and sodium may be disadvantageous in terms of flame retardance. Considering these, different alkali metals in the sulfonic acid alkali metal salt can be used, but a potassium sulfonate salt, which has excellent balance of properties in any respect, is most suitable. Such a potassium salt and a sulfonic acid alkali metal salt including another alkali metal can also be used in combination.

Specific examples of the perfluoroalkyl sulfonic acid alkali metal salt include potassium trifluoromethanesulfonate, potassium perfluorobutanesulfonate, potassium perfluorohexanesulfonate, potassium perfluorooctanesulfonate, sodium pentafluoroethanesulfonate, sodium perfluorobutanesulfonate, sodium perfluorooctanesulfonate, lithium trifluoromethanesulfonate, lithium perfluorobutanesulfonate, lithium perfluoroheptanesulfonate, cesium trifluoromethanesulfonate, cesium perfluorobutanesulfonate, cesium perfluorooctanesulfonate, cesium perfluorohexanesulfonate, rubidium perfluorobutanesulfonate, and rubidium perfluorohexanesulfonate, and these can be used alone or in combination of two or more types thereof. The carbon number of the perfluoroalkyl group is preferably in the range of 1 to 18, more preferably in the range of 1 to 10, and further preferably in the range of 1 to 8. Among these, potassium perfluorobutanesulfonate is particularly preferable. Into perfluoroalkyl sulfonic acid alkali (earth) metal salts including alkali metals, not a little amount of fluoride ions (F-) is usually mixed. The presence of such fluoride ions can be a factor that reduces flame retardance, and thus the mixing amount is preferably decreased as much as possible. The percentage of such fluoride ions can be measured by ion chromatography. The content of fluoride ions is preferably 100 ppm or less, further preferably 40 ppm or less, and particularly preferably 10 ppm or less. The content is suitably 0.2 ppm or more for manufacturing efficiency. The perfluoroalkyl sulfonic acid alkali (earth) metal salt having a decreased amount of fluoride ions can be produced by using a known production method as the production method, and additionally using, for example, a method of decreasing the amount of fluoride ions contained in the raw material when a fluorine-containing organometallic salt is produced, a method of removing the hydrogen fluoride and the like obtained through reaction by gas generated during reaction or heating, and a method of decreasing the amount of fluoride ions using purification methods such as recrystallization and reprecipitation during production of a fluorine-containing organometallic salt. In particular, an organometallic salt flame retardant is relatively soluble in water, and thus is preferably produced by a process in which dissolution is performed at a temperature higher than room temperature using ion-exchanged water, especially water with an electrical resistance value of 18 MΩ · cm or more, that is, an electrical conductivity of about 0.55 μS/cm or less, washing is performed, and then recrystallization is performed by cooling.

Specific examples of the aromatic sulfonic acid alkali (earth) metal salt include disodium diphenylsulfide-4,4'-disulfonate, dipotassium diphenylsulfide-4,4'-disulfonate, potassium 5-sulfoisophthalate, sodium 5-sulfoisophthalate, polysodium polyethylene terephthalate polysulfonate, calcium 1-methoxynaphthalene-4-sulfonate, disodium 4-dodecylphenyl ether disulfonate, polysodium poly(2,6-dimethylphenylene oxide)polysulfonate, polysodium poly(1,3-phenylene oxide)polysulfonate, polysodium poly(1,4-phenylene oxide)polysulfonate, polypotassium poly(2,6-diphenylphenylene oxide)polysulfonate, lithium poly(2-fluoro-6-butylphenylene oxide)polysulfonate, a potassium sulfonate of benzene sulfonate, sodium benzene sulfonate, strontium benzene sulfonate, magnesium benzene sulfonate, dipotassium p-benzene disulfonate, dipotassium naphthalen-2,6-disulfonate, calcium biphenyl-3,3'-disulfonate, sodium diphenylsulfon-3-sulfonate, potassium diphenylsulfone-3-sulfonate, dipotassium diphenylsulphon-3,3'-disulfonate, dipotassium diphenylsulfone-3,4'-disulfonate, sodium α,α,α-trifluoroacetophenone-4-sulfonate, dipotassium benzophenone-3,3'-disulfonate, disodium thiophene-2,5-disulfonate, dipotassium thiophene-2,5-disulfonate, calcium thiophene-2,5-disulfonate, sodium benzothiophene sulfonate, potassium diphenylsulfoxide-4-sulfonate, a formalin condensate of sodium naphthalene sulfonate, and a formalin condensate of sodium anthracene sulfonate. Among these aromatic sulfonic acid alkali (earth) metal salts, potassium salts are particularly suitable. Among these aromatic sulfonic acid alkali (earth) metal salts, potassium diphenylsulfone-3-sulfonate and dipotassium diphenylsulfone-3,3'-disulfonate are suitable, and a mixture of these (the weight ratio between the former and the latter is 15/85 to 30/70) is particularly suitable.

Suitable examples of an organometallic salt other than sulfonic acid alkali (earth) metal salts include an alkali (earth) metal salt of a sulfate ester and an alkali (earth) metal salt of an aromatic sulfonamide. Examples of an alkali (earth) metal salt of a sulfate ester include, in particular, an alkali (earth) metal salt of a sulfate ester of a monohydric and/or polyhydric alcohol, and examples of such a sulfate ester of a monohydric and/or polyhydric alcohol include methyl sulfate

ester, ethyl sulfate ester, lauryl sulfate ester, hexadecyl sulfate ester, a sulfate ester of polyoxyethylene alkylphenyl ether, mono, di, tri, tetrasulfate esters of pentaerythritol, a sulfate ester of lauric acid monoglyceride, a sulfate ester of palmitate monoglyceride, and a sulfate ester of stearic acid monoglyceride. Examples of an alkali (earth) metal salt of these sulfate esters preferably include an alkali (earth) metal salt of lauryl sulfate ester. Examples of an alkali (earth) metal salt of an aromatic sulfonamide include alkali (earth) metal salts of saccharin, N-(p-tolylsulfonyl)-p-toluenesulfoimide, N-(N'-benzylaminocarbonyl)sulfonylimide, and N-(phenylcarboxyl)sulfonylimide. The content of the organometallic salt flame retardant is preferably 0.001 to 1 part by weight, more preferably 0.005 to 0.5 parts by weight, further preferably 0.01 to 0.3 parts by weight, and particularly preferably 0.03 to 0.15 parts by weight relative to 100 parts by weight of the component A.

(ii) Organic phosphorus flame retardant

As the organic phosphorus flame retardant, an aryl phosphate compound is suitable. This is because such a phosphate compound is generally excellent in hues. A phosphate compound has a plasticizing effect, and thus is advantageous in that molding processability can be improved. As such a phosphate compound, various phosphate compounds known as conventional flame retardants can be used. The blending amount of the organic phosphorus flame retardant is preferably 0.01 to 20 parts by weight, more preferably 2 to 10 parts by weight, and further preferably 2 to 7 parts by weight relative to 100 parts by weight of the component A.

(II) Hindered phenol stabilizer

A hindered phenol stabilizer can be further blended into the resin composition of the invention. Such blending has an effect of, for example, suppressing the deterioration of hues during molding processing and deterioration of hues due to long-term use. Examples of the hindered phenol stabilizer include α-tocopherol, butylhydroxytoluene, sinapyl alcohol, vitamin E, n-octadecyl-β-(4'-hydroxy-3',5'-di-tert-butylphenyl)propionate, 2-tert-butyl-6-(3'-tert-butyl-5'-methyl-2'-hydroxybenzyl)-4-methylphenyl acrylate, 2,6-di-tert-butyl-4-(N,N-dimethylaminomethyl)phenol, 3,5-di-tert-butyl-4-hydroxybenzylphosphonate diethyl ester, 2,2'-methylenebis(4-methyl-6-tert-butylphenol), 2,2'-methylenebis(4-ethyl-6-tert-butylphenol), 4,4'-methylenebis(2,6-di-tert-butylphenol), 2,2'-methylenebis(4-methyl-6-cyclohexylphenol), 2,2'-dimethylene-bis(6-α-methyl-benzyl-p-cresol)2,2'-ethylidene-bis(4,6-di-tert-butylphenol), 2,2'-butylidene-bis(4-methyl-6-tert-butylphenol), 4,4'-butylidenebis(3-methyl-6-tert-butylphenol), triethylene glycol-N-bis-3-(3-tert-butyl-4-hydroxy-5-methylphenyl)propionate, 1,6-hexanediolbis[3-(3,5-di-tert-butyl-4-hydroxyphenyl)propionate], bis[2-tert-butyl-4-methyl-6-(3-tert-butyl-5-methyl-2-hydroxybenzyl)phenyl]terephthalate, 3,9-bis{2-[3-(3-tert-butyl-4-hydroxy-5-methylphenyl)propionyloxy]-1,1,-dimethylethyl}-2,4,8,10-tetraoxaspiro[5,5]undecane, 4,4'-thiobis(6-tert-butyl-m-cresol), 4,4'-thiobis(3-methyl-6-tert-butylphenol), 2,2'-thiobis(4-methyl-6-tert-butylphenol), bis(3,5-di-tert-butyl-4-hydroxybenzyl)sulfide, 4,4'-di-thiobis(2,6-di-tert-butylphenol), 4,4'-tri-thiobis(2,6-di-tert-butylphenol), 2,2-thiodiethylenebis-[3-(3,5-di-tert-butyl-4-hydroxyphenyl)propionate], 2,4-bis(n-octylthio)-6-(4-hydroxy-3',5'-di-tert-butylanilino)-1,3,5-triazine, N,N'-hexamethylenebis-(3,5-di-tert-butyl-4-hydroxyhydrocinnamide), N,N'-bis[3-(3,5-di-tert-butyl-4-hydroxyphenyl)propionyl]hydrazine, 1,1,3-tris(2-methyl-4-hydroxy-5-tert-butylphenyl)butane, 1,3,5-trimethyl-2,4,6-tris(3,5-di-tert-butyl-4-hydroxybenzyl) benzene, tris(3,5-di-tert-butyl-4-hydroxyphenyl)isocyanurate, tris(3,5-ditert-butyl-4-hydroxybenzyl)isocyanurate, 1,3,5-tris(4-tert-butyl-3-hydroxy-2,6-dimethylbenzyl)isocyanurate, 1,3,5-tris2[3(3,5-di-tert-butyl-4-hydroxyphenyl)propionyloxy]ethylisocyanurate, and tetrakis[methylene-3-(3',5'-di-tert-butyl-4-hydroxyphenyl)propionate]methane. All of these are readily available. The hindered phenol stabilizer can be used alone or in combination of two or more types thereof.

The blending amount of the hindered phenol stabilizer is preferably 0.0001 to 1 part by weight, more preferably 0.001 to 0.5 parts by weight, and further preferably 0.005 to 0.3 parts by weight relative to 100 parts by weight of the component A.

(III) Other heat stabilizers

Other heat stabilizers other than the aromatic phosphite ester stabilizer and the hindered phenol stabilizer can be blended into the resin composition of the invention. Suitable examples of such other heat stabilizers include lactone stabilizers such as a reaction product of 3-hydroxy-5,7-di-tert-butyl-furan-2-one and o-xylene. Details of such stabilizers are described in JP 07-233160 A. Such compounds are commercially available as Irganox HP-136 (trademark, manufactured by CIBA SPECIALTY CHEMICALS), and the compound can be used. Further, a stabilizer in which the compound is mixed with various phosphite compounds and hindered phenolic compounds is commercially available. Suitable examples thereof include Irganox HP-2921 manufactured by the company. The blending amount of a lactone stabilizer is preferably 0.0005 to 0.05 parts by weight, and more preferably 0.001 to 0.03 parts by weight relative to 100 parts by weight of the component A. Examples of other stabilizers include sulfur-containing stabilizers such as pentaerythritol tetrakis(3-mercaptopropionate), pentaerythritol tetrakis(3-laurylthiopropionate), and glycerol-3-stearylthiopropionate. The blending amount of such sulfur-containing stabilizers is preferably 0.001 to 0.1 parts by weight,

and more preferably 0.01 to 0.08 parts by weight relative to 100 parts by weight of the component A.

(IV) Ultraviolet absorber

An ultraviolet absorber can also be blended into the resin composition of the invention for the purpose of imparting light resistance.

Specific examples of benzophenone ultraviolet absorbers include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-n-dodecyloxybenzophenone, and 2-hydroxy-4-methoxy-2'-carboxybenzophenone.

Examples of benzotriazole ultraviolet absorbers include 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2H-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolephenyl), 2,2'-p-phenylenebis(1,3-benzoxazin-4-one), and 2-[2-hydroxy-3-(3,4,5,6-tetrahydrophthalimidomethyl)-5-methylphenyl]benzotriazole; and polymers having a 2-hydroxyphenyl-2H-benzotriazole backbone such as a copolymer of 2-(2'-hydroxy-5-methacryloxyethylphenyl)-2H-benzotriazole and a vinyl monomer capable of copolymerizing with the monomer and a copolymer of 2-(2'-hydroxy-5-acryloxyethylphenyl)-2H-benzotriazole and a vinyl monomer capable of copolymerizing with the monomer.

Examples of hydroxyphenyltriazine ultraviolet absorbers include 2-(4,6-diphenyl-1,3,5-triazin-2-yl)-5-hexyloxyphenol, 2-(4,6-diphenyl-1,3,5-triazin-2-yl)-5-methyloxyphenol, 2-(4,6-diphenyl-1,3,5-triazin-2-yl)-5-ethyloxyphenol, 2-(4,6-diphenyl-1,3,5-triazin-2-yl)-5-propyloxyphenol, and 2-(4,6-diphenyl-1,3,5-triazin-2-yl)-5-butyloxyphenol. Further, examples thereof include a compound in which the phenyl group of the compounds exemplified above is a 2,4-dimethylphenyl group such as 2-(4,6-bis(2,4-dimethylphenyl)-1,3,5-triazin-2-yl)-5-hexyloxyphenol.

Examples of cyclic imino ester ultraviolet absorbers include 2,2'-p-phenylenebis(3,1-benzoxazin-4-one), 2,2'-m-phenylenebis(3,1-benzoxazin-4-one), and 2,2'-p,p'-diphenylenebis(3,1-benzoxazin-4-one) .

Examples of cyanoacrylate ultraviolet absorbers include 1,3-bis-[(2'-cyano-3',3'-diphenylacryloyl)oxy]-2,2-bis[(2-cyano-3,3-diphenylacryloyl)oxy]methyl)propane, and 1,3-bis-[(2-cyano-3,3-diphenylacryloyl)oxy]benzene.

Further, when the ultraviolet absorbers have a structure of a monomer compound capable of radical polymerization, they can be each a polymer ultraviolet absorber obtained by copolymerizing such an ultraviolet absorbable monomer and/or a photostable monomer; and a monomer such as an alkyl (meth)acrylate. Suitable examples of the ultraviolet absorbable monomer include a compound containing a benzotriazole backbone, a benzophenone backbone, a triazine backbone, a cyclic iminoester backbone, or a cyanoacrylate backbone in the ester substituent of a (meth) acrylic acid ester. Among the above, benzotriazole and hydroxyphenyltriazine ultraviolet absorbers are preferable in terms of ultraviolet absorption ability, and cyclic iminoester and cyanoacrylate ultraviolet absorbers are preferable in terms of heat resistance and hue. Specific examples include "KEMISORB 79" manufactured by CHEMIPRO KASEI. The ultraviolet absorbers can be used alone or in a mixture of two or more types.

The content of the ultraviolet absorber is preferably 0.01 to 3 parts by weight, more preferably 0.02 to 2 parts by weight, further preferably 0.03 to 1 part by weight, and particularly preferably 0.05 to 0.5 parts by weight relative to 100 parts by weight of the component A.

(V) Other additives

In addition to the above, additives known per se can be blended into the resin composition of the invention in a small percentage to impart various functions to or improve properties of the molded article as long as the object of the invention is not impaired. Examples of such additives include an antistatic agent, a flow modifier, an infrared absorber (heat ray absorber), and a bluing agent.

<Production method of polycarbonate resin composition>

In the polycarbonate resin composition of the invention, the method for blending an additive is not particularly limited, and a known method can be used. Examples of the most commonly used method include a method in which a polycarbonate resin and an additive are premixed, then the premixture is placed into an extruder for melt kneading, and the extruded threads are cooled and cut with a pelletizer to produce a pellet-like molding material.

Both a single-screw extruder and a twin-screw extruder can be used as the extruder in the above method, but a twin-screw extruder is preferable from the viewpoint of productivity and kneading properties. Typical examples of such a twin-screw extruder include TEX (manufactured by The Japan Steel Works, LTD., trade name). Specific examples of the same type include TEX (manufactured by The Japan Steel Works, LTD., trade name), TEM (manufactured by Toshiba Machine Co., Ltd., trade name), KTX (manufactured by KOBE STEEL, LTD., trade name), and ZSK (manufactured by Werner & Pfleiderer, trade name). As the extruder, one having a vent capable of degassing moisture in the raw material and volatile gas generated from the melt kneading resin can be preferably used. A vacuum pump is preferably installed to efficiently discharge the generated moisture and volatile gas from the vent to the outside of the extruder. A screen for removing foreign matter mixed in the extrusion raw material can also be installed in a zone in front of an extruder die to remove foreign matter from the resin composition. Examples of such a screen include a wire mesh, a screen changer, and a sintered metal plate (a disc filter and the like).

Further, though the additive can be supplied to the extruder independently, it is preferably premixed with the resin raw material as described above. Examples of the means for such premixing include a Nauta mixer, a V-type blender, a Henschel mixer, a mechanochemical device, and an extrusion mixer. A more suitable method is, for example, a method in which a part of the raw material resin and the additive are mixed with a high-speed stirrer such as a Henschel mixer to produce a master agent, and then the master agent is mixed with the remaining total amount of the resin raw material with a non-high-speed stirrer such as a Nauta mixer.

<Molded article>

The aromatic polycarbonate resin composition of the invention can be formed into a desired molded article according to a known molding method such as injection molding, blow molding, extrusion molding, or rotational molding.

Examples of the molded article suitably used in the invention include a molded article that is subjected to steam sterilization treatment in medical use and food use. Examples

Hereinafter, the invention will be described in more detail with reference to examples, but the invention is not limited to the following Examples as long as it does not exceed the gist thereof.

The raw materials used in the following Examples and Comparative Examples are as follows.

<(A) Aromatic polycarbonate resin>

PC: Panlite L-1225WP manufactured by TEIJIN LIMITED (polycarbonate resin whose raw material is bisphenol A, viscosity average molecular weight: 22,400)

<(B) Epoxy group-containing compound>

B-1: MARPROOF G0250SP manufactured by NOF CORPORATION (copolymer of styrene and glycidyl methacrylate)

<(C) Glycerin monofatty acid ester>

C-1: RIKEMAL S-100A manufactured by RIKEN VITAMIN CO., LTD. (glycerin monostearate)
C-2 (Comparative Example): UNISTER H-476-S manufactured by NOF CORPORATION (pentaerythritol tetrastearate)

<(D) Aromatic phosphite ester heat stabilizer>

D-1: IRGAFOS 168 manufactured by BASF (tris(2,4-di-tert-butylphenyl)phosphite)

The evaluation method used in Examples and Comparative Examples is as follows.

(1) Moist heat resistance

The pellet-like molding material obtained from each composition of Examples was dried at 120°C for 5 hours in a hot air circulation dryer, and a molded plate having a width of 50 mm, a length of 90 mm, and a thickness of 2 mm was molded at a molding temperature of 350°C and a mold temperature of 80°C using an injection molding machine [J85-ELIII manufactured by The Japan Steel Works, LTD.]. This molded plate was subjected to moist heat treatment (temperature: 130°C, 24 hours) using a steam sterilizer [SN-510 manufactured by Yamato Scientific co., ltd.], hazes and viscosity

average molecular weights (Mv) before and after moist heat treatment were measured, the value obtained by subtracting the haze before moist heat treatment from the haze after moist heat treatment was taken as ΔHaze, and the value obtained by subtracting the viscosity average molecular weight (Mv) after moist heat treatment from the viscosity average molecular weight (Mv) before moist heat treatment was taken as ΔMv. The smaller ΔHaze is, the better, and also, the smaller ΔMv is, the better. The haze of the molded plate was measured according to JIS-K7361-1, and the viscosity average molecular weight (Mv) was measured by the following method.

Measurement of viscosity average molecular weight (Mv) The specific viscosity ($\eta_{SP}$) calculated by the following formula was determined using an Ostwald viscometer from a solution in which 0.7 g of the molded plate was dissolved in 100 ml of methylene chloride at 20°C, and the viscosity average molecular weight Mv was calculated from the determined specific viscosity ($\eta_{SP}$) by the following formula.

$$\text{Specific viscosity } (\eta_{SP}) = (t - t_0)/t_0$$

[$t_0$ is the number of seconds during which methylene chloride drops, and t is the number of seconds during which the sample solution drops]

$\eta_{SP}/c = [\eta] + 0.45 \times [\eta]^2 c$ (where [η] is the limiting viscosity)

$$[\eta] = 1.23 \times 10^{-4} Mv^{0.83}$$

$$c = 0.7$$

(2) Molding heat resistance ΔE

When each test piece was molded in (1) above, the hue (L*, a*, b*) of the test piece that was taken out of the mold immediately and the hue (L*', a*', b*') of the test piece that was taken out after being retained in the mold for 60 minutes were measured with a spectrophotometer CE-7000A manufactured by SAKATA INX CORPORATION with a D65 light source by transmission method of a 10-degree field of view, and the color difference ΔE of each of the test pieces was calculated by the following formula (a). The smaller ΔE is, the better.

$$\Delta E = \{(\Delta L^*)^2 + (\Delta a^*)^2 + (\Delta b^*)^2\}^{1/2} \quad \text{... formula (a)}$$

Hue of "molded plate before being retained": L*, a*, b*
Hue of "molded plate after being retained": L*', a*', b*'

ΔL*: L* - L*'
Δa*: a* - a*'
Δb*: b* - b*'

Examples 1 to 4 and Comparative Examples 1 to 6

The raw materials were blended in the ratio shown in Tables 1 and 2, and then were melt kneaded with a twin-screw extruder with a bent having a screw diameter of 30 mm, TEX30α manufactured by The Japan Steel Works, LTD. at a cylinder temperature of 280°C, and a pellet-like molding material was obtained by strand cutting. The test pieces for evaluation were molded under the above conditions, the evaluation was performed, and the evaluation results are shown in Tables 1 and 2.

[Table 1]

| | | | Example 1 | Example 2 | Example 3 | Example 4 |
|---|---|---|---|---|---|---|
| Composition (parts by weight) | Component A | PC | 100 | 100 | 100 | 100 |
| | Component B | B-1 | 0.03 | 0.02 | 0.03 | 0.03 |
| | Component C | C-1 | 0.1 | 0.1 | 0.1 | 0.06 |
| | | C-2 | | | | |
| | Component D | D-1 | | 0.015 | 0.015 | 0.015 |
| Properties | Moist heat resistance ΔHaze | | 0.1 | 0.4 | 0.0 | 0.0 |
| | Moist heat resistance ΔMv | | 0.7 | 0.8 | 0.7 | 0.6 |

[Table 1] (Continued)

| | | | Comparative Example 1 | Comparative Example 2 | Comparative Example 3 | Comparative Example 4 | Comparative Example 5 |
|---|---|---|---|---|---|---|---|
| Composition (parts by weight) | Component A | PC | 100 | 100 | 100 | 100 | 100 |
| | Component B | B-1 | | | | 0.03 | 0.03 |
| | Component C | C-1 | | 0.1 | 0.1 | | 0.3 |
| | | C-2 | | | | 0.15 | |
| | Component D | D-1 | | | 0.015 | 0.015 | 0.015 |
| Properties | Moist heat resistance ΔHaze | | 1.0 | 1.6 | 1.3 | 0.5 | 1.2 |
| | Moist heat resistance ΔMv | | 1.2 | 1.0 | 1.1 | 1.0 | 1.1 |

[Table 2]

| | | | Example 3 | Comparative Example 6 |
|---|---|---|---|---|
| Composition (parts by weight) | Component A | PC | 100 | 100 |
| | Component B | B-1 | 0.03 | 0.05 |
| | Component C | C-1 | 0.1 | 0.1 |
| | | C-2 | | |
| | Component D | D-1 | 0.015 | 0.015 |
| Properties | Moist heat resistance ΔHaze | | 0.0 | 0.0 |
| | Moist heat resistance ΔMv | | 0.7 | 0.7 |
| | Molding heat resistance ΔE | | 1.3 | 2.0 |

Industrial Applicability

The aromatic polycarbonate resin composition of the invention is excellent in moist heat resistance and molding heat resistance. Therefore, the aromatic polycarbonate resin composition can be applied to various uses in which an aromatic polycarbonate resin is used, and is particularly useful, for example, as use of a molded article that is subjected to steam sterilization treatment in medical use and food use.

## Claims

1. An aromatic polycarbonate resin composition, comprising: 0.02 to 0.04 parts by weight of (B) an epoxy group-containing compound (component B); and 0.06 to 0.15 parts by weight of (C) a glycerin monofatty acid ester (component C) relative to 100 parts by weight of (A) an aromatic polycarbonate resin (component A).

2. The aromatic polycarbonate resin composition according to claim 1, comprising: 0.01 to 0.02 parts by weight of (D) an aromatic phosphite ester heat stabilizer (component D) relative to 100 parts by weight of the component A.

3. The aromatic polycarbonate resin composition according to claim 1 or 2, wherein the component B is a copolymer of styrene and glycidyl methacrylate.

4. A molded article, which is formed from the aromatic polycarbonate resin composition according to any one of claims 1 to 3.

**INTERNATIONAL SEARCH REPORT**

International application No. **PCT/JP2023/007005**

**A. CLASSIFICATION OF SUBJECT MATTER**

***C08L 69/00***(2006.01)i; ***C08K 5/103***(2006.01)i; ***C08K 5/524***(2006.01)i; ***C08L 25/14***(2006.01)i; ***C08L 63/00***(2006.01)i
FI: C08L69/00; C08K5/103; C08K5/524; C08L25/14; C08L63/00 A

According to International Patent Classification (IPC) or to both national classification and IPC

**B. FIELDS SEARCHED**

Minimum documentation searched (classification system followed by classification symbols)

C08L69/00; C08K5/103; C08K5/524; C08L25/14; C08L63/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2020-97709 A (SUMIKA POLYCARBONATE LTD.) 25 June 2020 (2020-06-25) | 1-4 |
| A | JP 2017-82111 A (SUMIKA STYRON POLYCARBONATE LTD.) 18 May 2017 (2017-05-18) | 1-4 |
| A | JP 2021-134286 A (IDEMITSU KOSAN CO., LTD.) 13 September 2021 (2021-09-13) | 1-4 |
| A | JP 2020-132840 A (TEIJIN LTD.) 31 August 2020 (2020-08-31) | 1-4 |
| A | JP 2016-104835 A (TEIJIN LTD.) 09 June 2016 (2016-06-09) | 1-4 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 April 2023** | **09 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/007005**

| Patent document cited in search report | Publication date (day/month/year) | Patent family member(s) | Publication date (day/month/year) |
|---|---|---|---|
| JP 2020-97709 A | 25 June 2020 | JP 6674526 B1 | |
| | | CN 111334020 A | |
| | | KR 10-2020-0076616 A | |
| JP 2017-82111 A | 18 May 2017 | (Family: none) | |
| JP 2021-134286 A | 13 September 2021 | WO 2021/172472 A1 | |
| | | TW 202138427 A | |
| | | CN 115135721 A | |
| | | KR 10-2022-0147082 A | |
| JP 2020-132840 A | 31 August 2020 | US 2022/0049092 A1 | |
| | | WO 2020/175487 A1 | |
| | | EP 3932981 A1 | |
| | | CN 113490710 A | |
| | | TW 202041584 A | |
| JP 2016-104835 A | 09 June 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5542810 B
- JP 2020132840 A
- JP 2021134286 A
- JP 2021120458 A
- JP 7233160 A